# EUROPEAN PATENT APPLICATION

(11) **EP 3 000 704 A1**
(43) Date of publication of application: **30.03.2016**
(21) Application number: 14186747.3
(22) Date of filing: 29.09.2014
(51) Int. Cl.: B62K 3/00, B62M 6/40

(54) **Shock-absorbing scooter**

(71) Applicant: Chiu, Chih-Hao, 813 Kaohsiung City (TW)
(72) Inventor: Chiu, Chih-Hao, 813 Kaohsiung City (TW)
(74) Representative: Chaillot, Geneviève

(57) **Abstract**

A shock-absorbing scooter (3) comprises a body (31), a steering frame (32) and two running units (33,34). An imaginary line (a) is defined between axes (331,341) of the two running units (33, 34). The body (31) is formed in an arched shape, with two ends (311, 312) respectively connected to a slanting frame (321) of the steering frame (32) and the axis (341) of the rear running unit (34) . The end of the body (31) connected to the slanting frame (321) is set above the imaginary line (a). The body (31) is directly connected to the slanting frame (321) and the rear running unit (34). Standing a user on the body (31) in cooperation with the special arched design allows the body (31) to create an elastic buffering force which absorb shocks and a sliding force which moves the scooter (3) forwards.

## Description

### BACKGROUND OF THE INVENTION

### 1. Field of the Invention

The present invention relates to a scooter structure, and more particularly to a shock-absorbing scooter.

### 2. Description of the Related Art

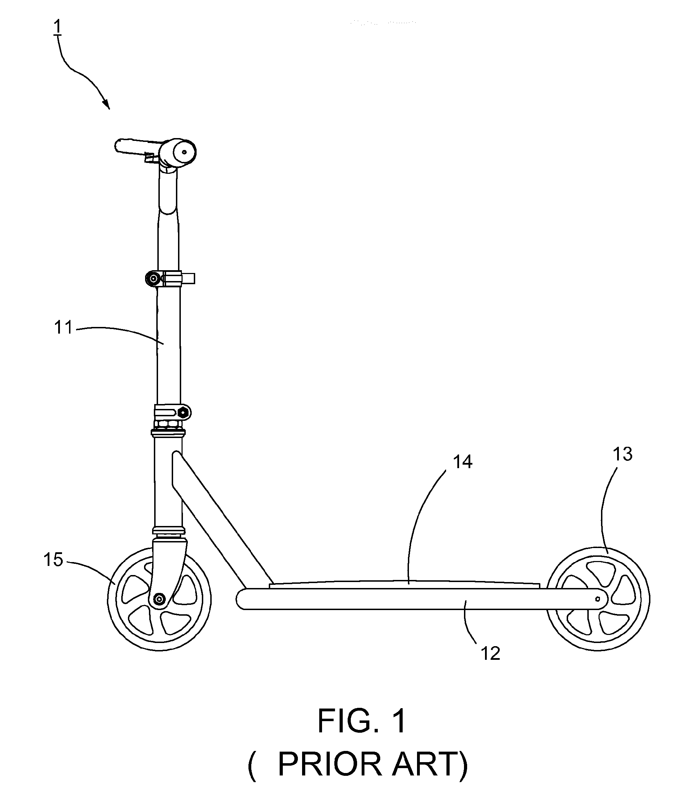

Referring to Fig. **1****,** a conventional scooter **1** comprises a steering bar **11,** a base frame **12** connected to the steering bar **11,** a rear wheel **13** pivotally disposed at a terminal end of the base frame **12,** a platform **14** disposed on the base frame **12** and a front wheel **15** disposed at a terminal end of the steering bar **11.** In use, a user stands one foot on the platform **14** and the base frame **12** bears the user's weight. The other foot of the user on the ground imparts a propelling force to push the scooter **1** forwards and then this other foot raises to depart from the ground and stand on the platform **14** to attain a sliding performance. The repeated foot-propelling operation accelerates the scooter **1** when the speed decreases to attain an exercising and sliding effect. However, if there are potholes or bumps on the road, the user standing on the platform **14** is easily subject to shocks which are transferred from the front wheel **15** to the steering bar **11** and the base frame **12** or from the rear wheel **13** to the base frame **12** and the platform **14.** The user cannot take comfort from such shocks, and his center of gravity may be unsteady due to the shocks, which causes dangers easily.

To improve the problems, some firms may install a shock absorber or a shock damper (not shown) on the scooter to absorb shocks. However, such product increases the weight of the scooter and renders the user unable to carry conveniently. It also adds the complexity of the scooter structure, which leads to an increase in the manufacturing and installation costs. In addition, when the shock absorber is mounted, a part of the pushing forces created by the sliding action is absorbed by the shock absorber. The residual pushing forces lose inevitably, which shortens the sliding distance for each pushing action and thus decreases the sliding pleasure. An incessant foot-propelling action is always needed if the user wants to slide continuously. Therefore, the conventional structures still require improvements.

### SUMMARY OF THE INVENTION

The object of the present invention is to provide a shock-absorbing scooter which simplifies the scooter structure, decreases the manufacturing cost and the complexity of installation and attains the effect of absorbing the shocks and sliding the scooter forwards.

The shock-absorbing scooter in accordance with the present invention comprises a body, a steering frame connected to the body, a front running unit pivotally disposed at a bottom of the steering frame, and a rear running unit pivotally connected to the body and disposed opposite to the front running unit. An imaginary line is defined between two axes of the two running units. The body is formed in an arched shape. Two ends of the body are respectively connected to a slanting frame of the steering frame and the axis of the rear running unit. The end of the body connected to the slanting frame is set above the imaginary line. Accordingly, the body with the special arched shape defining a height difference with the imaginary line creates a preferable elastic buffering effect while a user is standing on the body. When the user puts feet on the body and propels to slide, the buffering effect of the body can absorb shocks and facilitate the sliding inertia. Furthermore, because the body is directly connected to the slanting frame and the rear running unit, no other frame structures are set between the steering frame and the rear running unit in order to simplify the structure of the scooter and decrease costs.

Preferably, a diameter of the front running unit is larger than a diameter of the rear running unit.

Preferably, the front running unit and the rear running unit are respectively defined by a front skate blade and a rear skate blade.

Preferably, a collapsible device is disposed between the body and the steering frame to perform a folding state of the scooter.

### BRIEF DESCRIPTION OF THE DRAWINGS

- Fig. **1**: is a schematic view showing a prior art;
- Fig. **2**: is a perspective view showing a first preferred embodiment of the present invention;
- Fig. **3**: is a schematic view showing the first preferred embodiment of the present invention;
- Fig. **4**: is a schematic view showing the first preferred embodiment of the present invention in use;
- Fig. **5**: is a schematic view showing a second preferred embodiment of the present invention;
- Fig. **6**: is a schematic view showing a third preferred embodiment of the present invention;
- Fig. **7**: is a partial perspective view showing a fourth preferred embodiment of the present invention;
- Figs. **7a-7c**: are schematic views showing the fourth preferred embodiment of the present invention in different combinations;
- Fig. **8**: is a schematic view showing Fig. 7 in a folded state; and
- Fig. **9**: is a perspective view showing a fifth preferred embodiment of the present invention.

### DETAILED DESCRIPTION OF THE PREFERRED EMBODIMENTS

The advantages of the present invention over the known prior arts are more apparent to those of ordinary skilled in the art upon reading following descriptions in conjunction with the accompanying drawings.

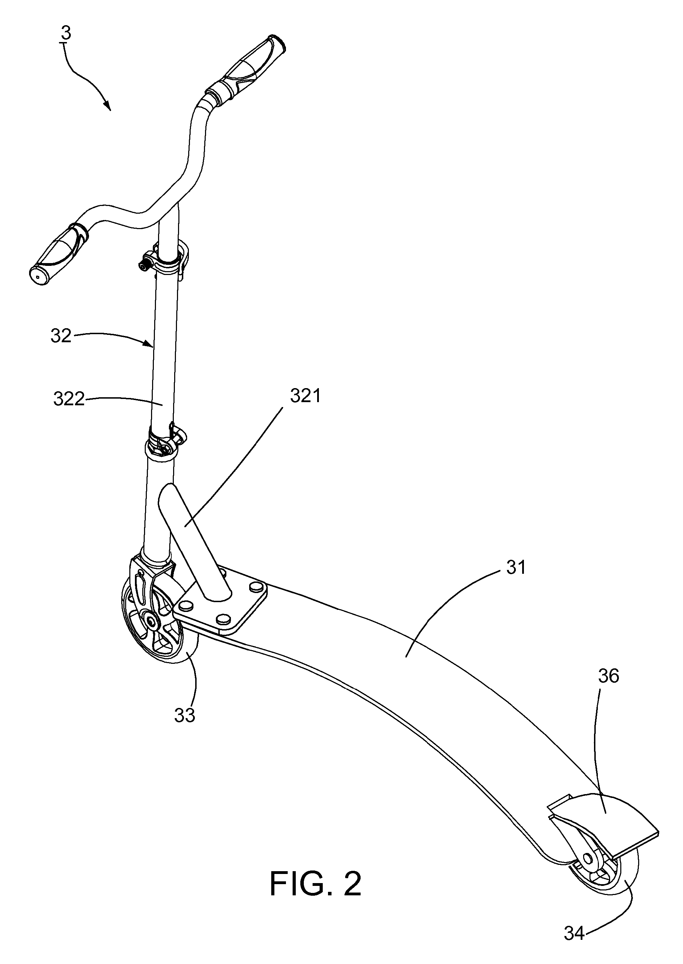

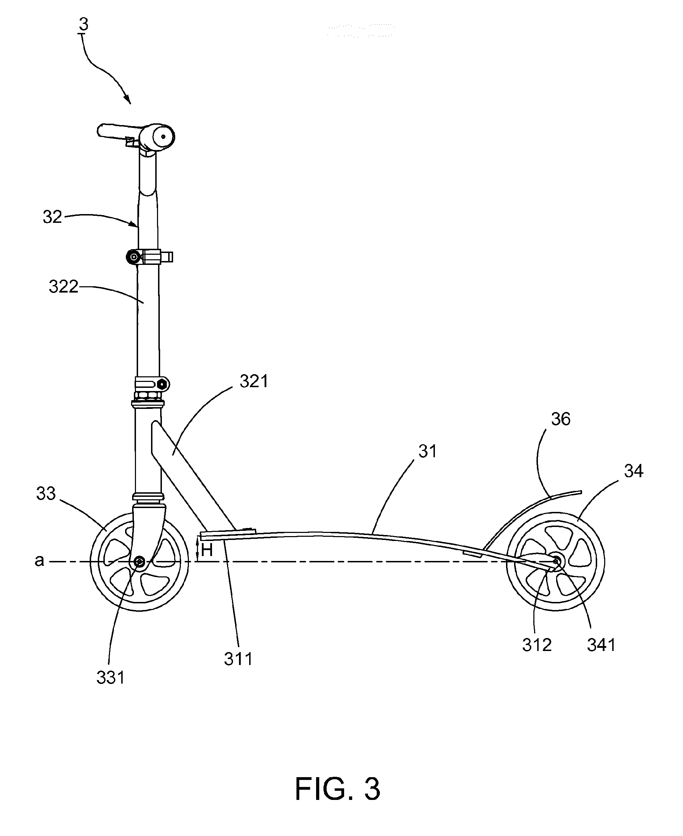

Referring to Fig. **2** and Fig. **3****,** a first preferred embodiment of a shock-absorbing scooter **3** of the present invention comprises a body **31,** a steering frame **32** connected to the body **31,** a front running unit **33** pivotally disposed at a bottom of the steering frame **32,** and a rear running unit **34** pivotally connected to the body **31** and opposite to the front running unit **33.** The rear running units can be shaped into different structures for different environments, and they are formed in a general wheel type in most of the embodiments of the present invention. An imaginary line **a** is defined from an axis **331** of the front running unit **33** to an axis **341** of the rear running unit **34,** namely between two axes of the two running units **33** and **34.** The steering frame **32** includes a slanting frame **321** connected to the body **31** and a bar frame **322** disposed through the slanting frame **321** and pivotally connected to the front running unit **33.** The body **31** is formed in an arched shape, with the body **31** including a first end **311** connected to the slanting frame **321** and a second end **312** connected to the axis **341** of the rear running unit **34.** The first end **311** where the body **31** is connected to the slanting frame **321** is disposed above the imaginary line **a** by a height **H,** as shown in Fig. **3****.** Therefore, the body **31,** as illustrated, is shaped into an arched structure with its front part higher than its rear part. Furthermore, the arched body **31** can be made of metal or elastic materials with plasticity, and herein the body **31** made of metal is adopted as an example.

In addition, a braking board **36** can be preferably disposed on the body **31.** Herein, the braking board **36** is fastened to a rear part of the body **31** and extended above the rear running unit **34** whereby the user can only tread on the braking board **36** to create a friction between the braking board **36** and the rear running unit **34** and attain a braking effect. This braking board **36** is adopted in most of the embodiments of the present invention, except the third embodiment.

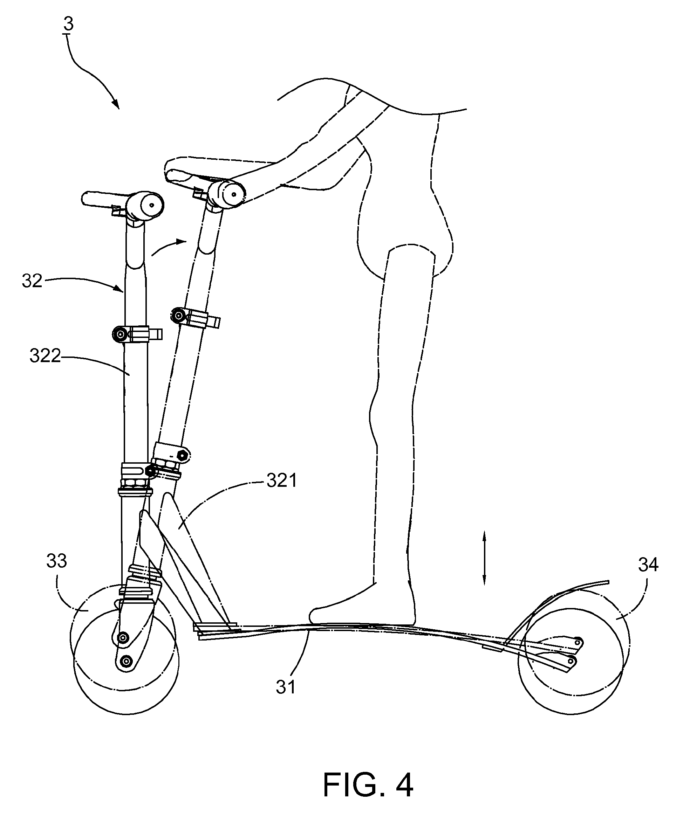

Referring to Fig. **3** and Fig. **4****,** when the user puts one foot on the body **31** before sliding, the body **31** is somewhat pressed or moved downwards by the user's weight due to its special arched structure. The moving scope of the body **31** can be enlarged due to the height **H** formed between the first end **311** of the body **31** and the imaginary line **a.** In this situation, since the slanting frame **321** is connected between the bar frame **322** and the body **31,** the bar frame **322** subject to the pressed body **31** is somewhat moved toward the user's body as arrowed to make the body **31** present a suspending and elastic state between the front running unit **33** and the rear running unit **34.** When the user begins to slide, his other foot can stand on the ground to propel the scooter **3** forwards and then move onto the body **31** so that the feet can stand on the body **31** at the same time to attain a sliding effect. When the sliding speed becomes low, the user can put his foot on the ground again to propel. Such actions are repeated to attain an exercising and sliding purpose. If the front running unit **33** or the rear running unit **34** drops into the pothole or strikes the bump while sliding on a rough and uneven road, shocks are transferred to the front running unit **33** or the rear running unit **34.** Due to the arched body **31** which is suspended between the steering frame **32** and the rear running unit **34,** an impact caused by the shocks to the user can be immediately relieved. Therefore, the present invention absorbs and damps down the shocks effectively without adding any shock absorbers. No additional frame structures are needed between the steering frame **32** and the rear running unit **34** to simplify the structure of the scooter **3** greatly and decrease manufacturing costs and the complexity of installation efficiently.

When the user continues sliding, the shocks created by the front running unit **33** and the rear running unit **34** may be sent to the body **31,** but they will be absorbed by the arched body **31** to damp down the shocks and attain a shock-absorbing effect. If the user bounces up and down while standing on the body **31,** the bar frame **322** also swings along with the bouncing action of the body **31.** In other words, if the user wants to continue the movement while the scooter **3** is moving, he can use the foot-propelling force to make the scooter **3** slide. Alternatively, he can also swing the bar frame **322** or impart a downward force to the body **31** in order that the up-and-down movement of the body **31** with elasticity synchronizes with the forward-and-backward swinging action of the bar frame **322** to create an inertia. Thus, the scooter **3** can move forwards and further under the inertia and the user can enjoy a different sliding pleasure.

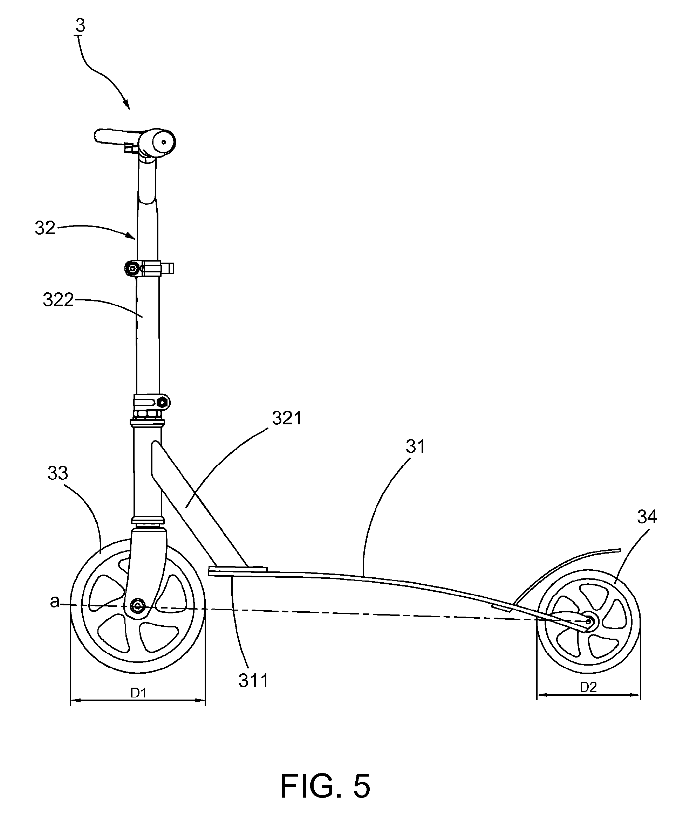

Referring to Fig. **5****,** a second preferred embodiment of a shock-absorbing scooter **3** of the present invention has the same elements, operations and purposes as the first embodiment. It is characterized in that a diameter **D1** of the front running unit **33** is bigger than a diameter **D2** of the rear running unit **34** to attain the structure with the first end **311** of the body **31** set above the imaginary line **a** and thus facilitates an increase in the elastic moving scope of the body **31.** Accordingly, the user can move the scooter **3** forwards smoothly after he stands on the body **31.**

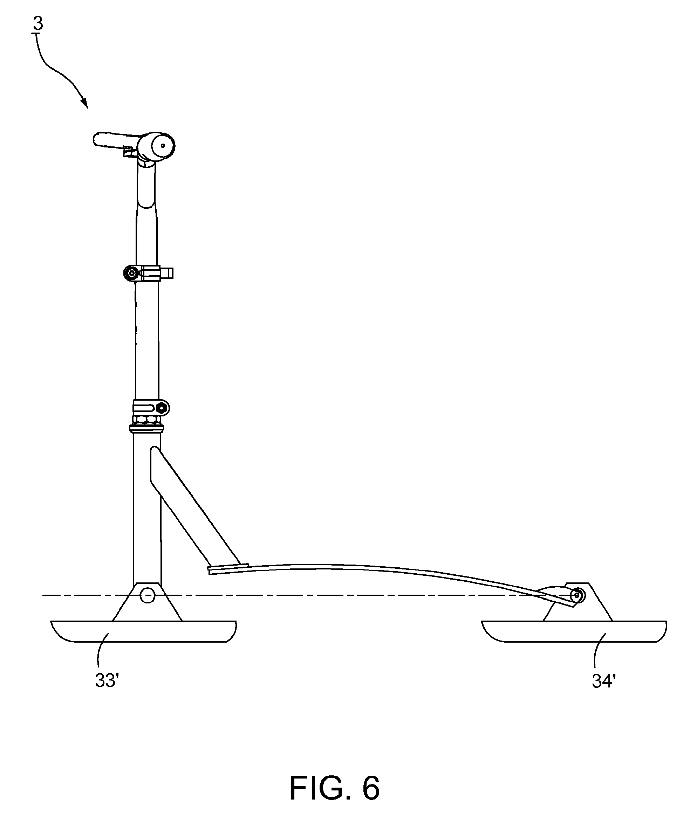

Referring to Fig. **6****,** a third preferred embodiment of shock-absorbing scooter **3** of the present invention is characterized in that the front running unit **33** and the rear running unit **34** are respectively defined by a front skate blade **33'** and a rear skate blade **34'.** No braking board is set in this embodiment. By using the skate blades **33'** and **34',** the scooter **3** can slide on a frozen ground indoors or outdoors to have a broader application and attain the ice-skating and shock-absorbing effect.

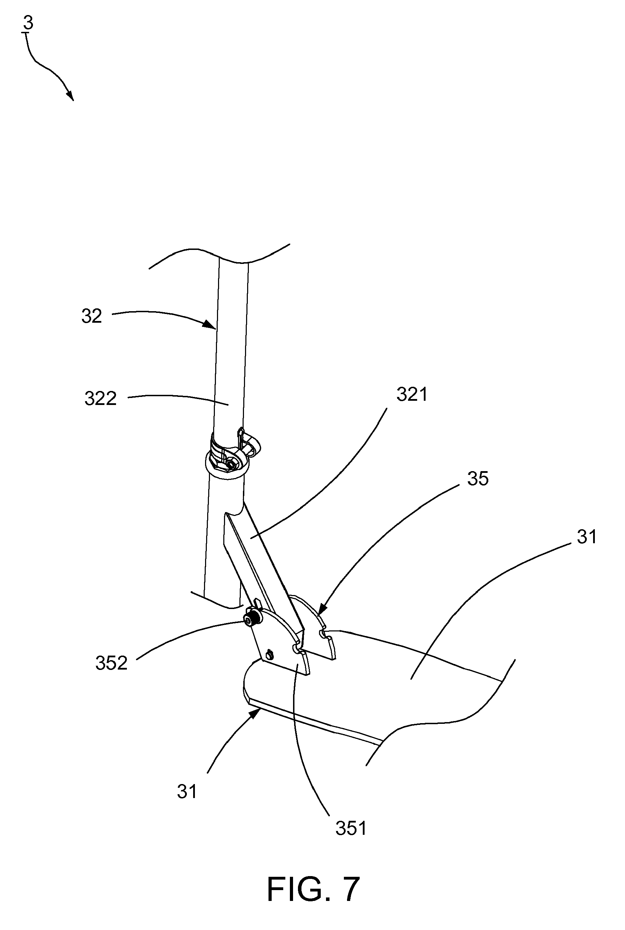

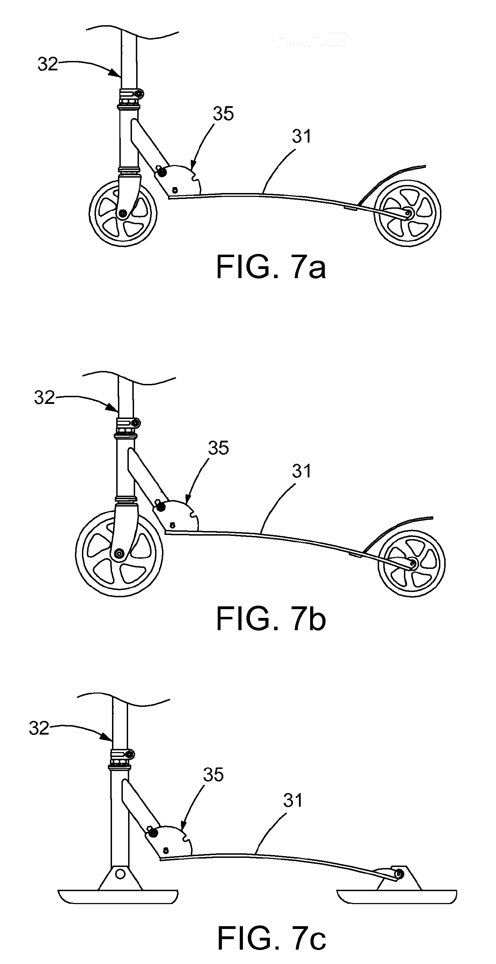

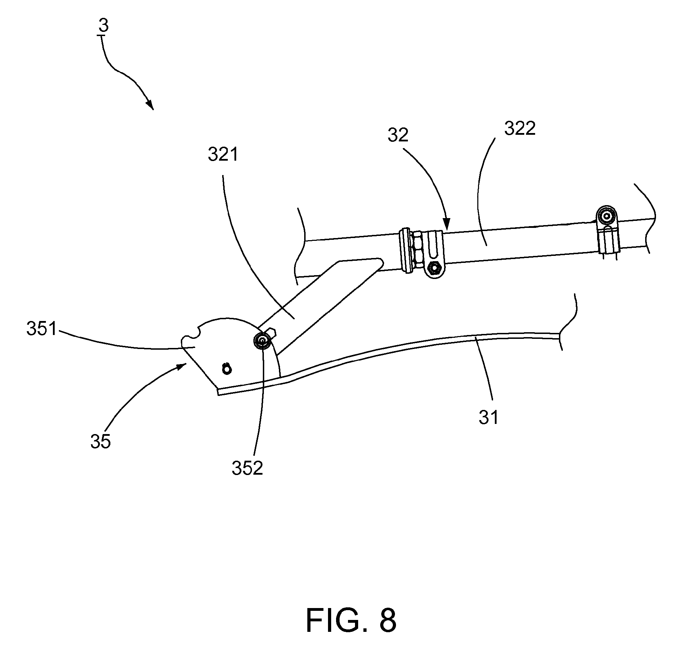

Referring to Fig. **7****,** a fourth preferred embodiment of shock-absorbing scooter **3** of the present invention still comprises the same elements as the first, the second or the third preferred embodiment as generally shown in figures, such as Figs. **7a-7c****.** This embodiment is characterized in that a collapsible device **35** is disposed between the body **31** and the steering frame **32** to perform a folded state of the scooter **3.** In this preferred embodiment, the collapsible device **35** can include a seat base **351** disposed on the body **31** and a fixing unit **352** disposed to connect the slanting frame **321** to the seat base **351.** Accordingly, the scooter **3** can be folded by the collapsible device **35** as shown in Fig. **8** for easy carrying and storing after the use. The folding action is executed by loosening the fixing unit **352,** moving the bar frame **322** of the steering frame **32** toward the body **31** and then fixing the slanting frame **321** onto the seat base **351** via the fixing unit **352.** Therefore, the steering frame **32** is moveable between a folded state where the body **31** and the bar frame **322** are generally parallel and an unfolded state where the body **31** and the bar frame **322** are generally perpendicular to each other.

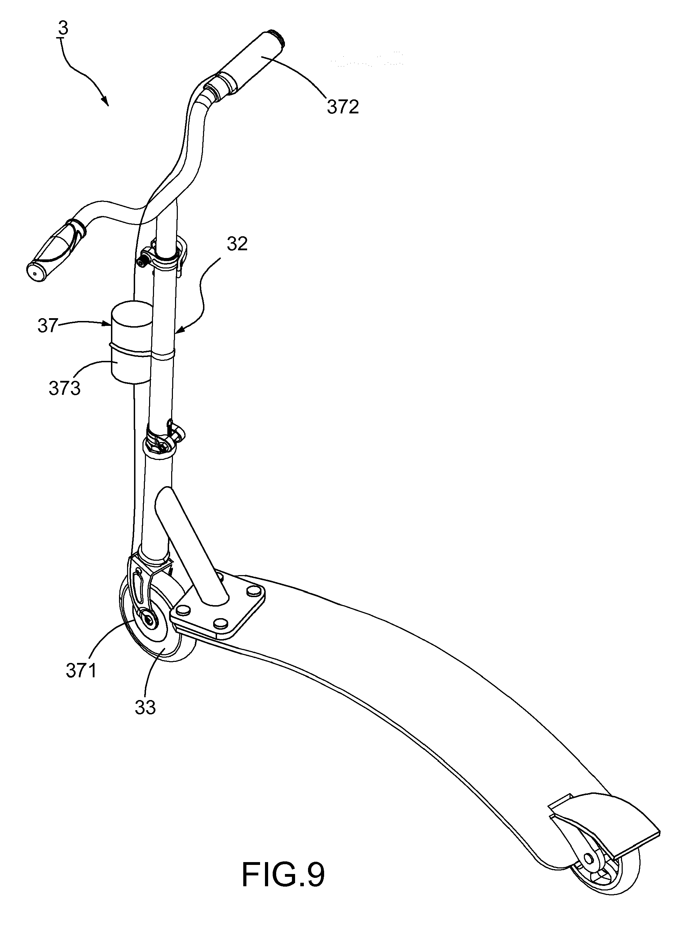

Referring to Fig. **9****,** a fourth preferred embodiment of shock-absorbing scooter **3** of the present invention still comprises the same elements as the first embodiment. Particularly, this embodiment further installs a power apparatus **37.** The power apparatus **37** can include a power device **371** for driving an operation of the front running unit **33,** a steering bar **372** disposed on the steering frame **32** to control the power device **371** and a power source **373** for providing power to the power device **371.** While steering the scooter **3,** the user uses the steering bar **372** to control the operation of the power device **371** and then drives a rotation of the front running unit **33** to move the scooter **3** forwards. Therefore, the scooter **3** can also slide forwards without manhandling.

To sum up, the present invention includes the arched body made of metal or elastic materials with plasticity and set above an imaginary line defined between two axes of the rear running units, so no other frame structures are needed between the steering frame and the rear running unit to simplify the scooter structure and decrease related costs. The body with the special arched design takes advantage of the standing action of the user to create an elastic buffering force to absorb shocks. Therefore, when the user stands on the body for sliding, the elastic property of the body facilitates the shock-absorbing effect, especially on the uneven road. The user takes advantage of the elastic buffering force to increase the inertia of the movement, which allows the scooter to move forwards and further and allows the user to attain a different sliding joy.

While the embodiments in accordance with the present invention are shown and described, it is understood that further variations and modifications may be made without departing from the scope of the invention.

## Claims

1. A shock-absorbing scooter (3) comprising a body (31), a steering frame (32) connected to said body (31), a front running unit (33) pivotally disposed at a bottom of said steering frame (32) and a rear running unit (34) pivotally connected to said body (31) and disposed opposite to said front running unit (33), with an imaginary line (a) defined from an axis (331) of said front running unit (33) to an axis (341) of said rear running unit (34);
**characterized in that** said steering frame (32) includes a slanting frame (321) connected to said body (31) and a bar frame (322) disposed through said slanting frame (321) and pivotally connected to said front running unit (33), said body (31) being formed in an arched shape, with a first end (311) of said body (31) connected to said slanting frame (321) and a second end (312) of said body (31) connected to said axis (341) of said rear running unit (34), said first end (311) where said body (31) is connected to said slanting frame (321) being disposed above said imaginary line (a) whereby said arched body (31) in cooperation with a standing action of a user on said body (31) creates an elastic buffering force to absorb shocks while operating.

2. The shock-absorbing scooter (3) according to claim 1, wherein a diameter (D1) of said front running unit (33) is larger than a diameter (D2) of said rear running unit (34).

3. The shock-absorbing scooter (3) according to claim 1, wherein said front running unit (33) and said rear running unit (34) are respectively defined by a front skate blade (33') and a rear skate blade (34').

4. The shock-absorbing scooter (3) according to claim 1, wherein a collapsible device (35) is disposed between said body (31) and said steering frame (32).

5. The shock-absorbing scooter (3) according to claim 2, wherein a collapsible device (35) is disposed between said body (31) and said steering frame (32).

6. The shock-absorbing scooter (3) according to claim 3, wherein a collapsible device (35) is disposed between said body (31) and said steering frame (32).
